# EUROPEAN PATENT APPLICATION

(11) **EP 1 909 295 A1**
(43) Date of publication of application: **09.04.2008**
(21) Application number: 06757118.2
(22) Date of filing: 07.06.2006
(51) Int. Cl.: H01B 1/06, C01B 33/12, H01M 8/02

(54) **PROTON CONDUCTIVE MEMBRANE AND PROCESS FOR PRODUCING THE SAME**

(30) Priority: 17.06.2005 JP 2005178041
(71) Applicant: Riken, Wako-shi, Saitama 351-0198 (JP)
(72) Inventor: KUNITAKE, Toyoki, 3510198 (JP); LI, Haibin, 3510198 (JP)
(74) Representative: Grünecker, Kinkeldey, Stockmair & Schwanhäusser Anwaltssozietät
(86) International application number: PCT/JP2006/311411
(87) International publication number: WO 2006/134809

(57) **Abstract**

A proton conductive membrane having high proton conductivity is provided.

A proton conductive membrane comprising a metal oxide structure having an orderly or random porous structure and, as contained by the porous structure, a proton acid salt having at least one hydrogen atom capable of being loosed as a proton.

## Description

### Technical filed

The present invention relates to a proton conductive membrane having good proton conductivity, and to a method for producing a proton conductive membrane.

### Background art

Animated technical development for proton conductive membrane is made as a central functional element of fuel cells. As general proton conductive membranes, known are membrane structures with a proton acid such as sulfuric acid or phosphoric acid bonding to the membrane itself, for example, Nafion^{™} and those described in JP-A 10-69817 and 2000-90946.
Proton acid attracts much notice as a conductive material, but its practical use involves many problems. For example, a polymer electrolyte membrane is used in many low-temperature fuel cells, and exhibits good low-temperature characteristics and chemical and mechanical stability; but high humidity is an indispensable condition for its use, therefore resulting in that its temperature is limited less than 100°C. In addition, when methanol is used as fuel, crossover with it worsens the cell performance.
Accordingly, a proton conductive membrane capable of being used at 100°C or higher is investigated. A proton conductive membrane comprising CsHSO₄ as the proton acid shows good proton conductivity at 140°C or higher, and is specifically noted (Nature 410 (19) 910-913 (2001)). However, this is still problematic in its workability and mechanical strength, and the prospects for its practical use are still far from certain. In addition, regarding its thickness, only a thick membrane having a thickness of 1 mm or so could be obtained, but a thin membrane having a thickness of 1 µm or so could not be produced.

### Disclosure of the invention

### Object to be achieved by the invention

The invention is to solve the above problems, and for example, its one object is to provide a solid electrolyte having good proton conductivity over a broad temperature range, that is, in a higher temperature range than that for proton conductive membranes heretofore widely known in the art such as Nafion^{™}, and in a lower temperature range than that for other proton conductive membranes also heretofore known and comprising a proton acid such as CsHSO₄.
Another object of the invention is to provide a proton conductive membrane comprising a proton acid, which has sufficient strength even though thin.

### Means for achieving the object

Given that situation, the present inventors have investigated and, as a result, have found that the proton conductive membrane of the conventional type has low conductivity since the proton acid therein is crystalline at room temperature. Accordingly, as a result of further investigations, the inventors have found that the above problems may be solved by the following means.
(1) A proton conductive membrane comprising a metal oxide structure having an orderly or random porous structure and a proton acid salt having at least one hydrogen atom capable of being loosed as a proton in the porous structure.
(2) A proton conductive membrane comprising a metal oxide structure and a proton acid salt in an amorphous state in the metal oxide structure.
(3) The proton conductive membrane according to (1) or (2), having a thickness of at most 1 µm.
(4) The proton conductive membrane according to (1), having a proton conductivity of at least 10⁻⁸ S·cm⁻¹ at a temperature lower than 100°C.
(5) The proton conductive membrane according to any one of (1) to (4), having a thickness of from 10 to 500 nm.
(6) The proton conductive membrane according to any one of (1) to (5), having a proton conductivity of at least 10⁻⁷ S·cm⁻¹ at a temperature lower than 100°C.
(7) The proton conductive membrane according to any one of (1) to (6), having a proton conductivity of at least 10⁻⁷ S·cm⁻¹ over a temperature range not lower than 60°C.
(8) The proton conductive membrane according to any one of (1) to (7), having a surface resistivity of from 0.01 to 10 Ωcm⁻².
(9) The proton conductive membrane according to any one of (1) to (8), wherein the metal oxide is silica.
(10) The proton conductive membrane according to any one of (1) to (9), wherein the proton acid salt has a sulfonic acid group or a phosphoric acid group.
(11) The proton conductive membrane according to (10), wherein the proton acid salt is CsHSO₄ and/or CsH₂PO₄.
(12) The proton conductive membrane according to any one of (1) to (11), having a porosity of at most 50 %.
(13) A membrane electrode assembly having a pair of electrodes and a proton conductive membrane of any one of (1) to (12) disposed between the electrodes.
(14) A fuel cell having a proton conductive membrane of any one of (1) to (12).
(15) A method for producing a proton conductive membrane of any one of (1) to (12), comprising hydrolyzing a mixture containing a metal oxide precursor and a proton acid salt, and forming it into a film.

### Effect of the invention

The proton conductive membrane of the invention has high proton conductivity in a broad temperature range. Further, the proton conductive membrane of the invention may be made much thinner than before, and therefore the proton conductive membrane may have a lower surface resistivity. Accordingly, the proton conductive membrane of the invention may be expected to be applicable to fuel cells, fuel cell electrodes, membrane electrode assemblies, electrochemical sensors, separation membranes of hydrogen, etc., moisture sensors, proton sensors, hydrogen sensors, etc.

### Brief description of the drawings

[Fig. 1] Fig. 1 is an outline view showing a process for producing the proton conductive membrane 1 in Example 1.
[Fig. 2] Fig. 2 is a graph showing the proton conductivity of the proton conductive membrane 1 produced in Example 1.
[Fig. 3] Fig. 3 is an outline view showing a process for producing the proton conductive membrane 2 in Example 2.
[Fig. 4] Fig. 4 shows graphs showing the data of X-ray diffraction of the proton conductive membrane 2(a) and the proton conductive membrane 3(b) in Example 2.
[Fig. 5] Fig. 5 shows images of the proton conductive membrane 2 in Example 2 as taken through scanning electron microscope, wherein (a) shows an surface image and (b) shows a cross-sectional image.
[Fig. 6] Fig. 6 is a graph showing the proton conductivity of the proton conductive membranes 2 to 4 in Example 2.
[Fig. 7] Fig. 7 is a graph showing the surface resistivity of the proton conductive membrane 3 in Example 2.
[Fig. 8] Fig. 8 is a graph showing the IR spectrum of the proton conductive membrane 5 in Example 3.
[Fig. 9] Fig. 9 is a graph showing the data of X-ray diffraction of the proton conductive membrane 5 in Example 3.
[Fig. 10] Fig. 10 is a graph showing the proton conductivity and the surface resistivity of the proton conductive membrane 5 in Example 3.
[Fig. 11] Fig. 11 is a graph showing the proton conductivity of the proton conductive membrane 6 produced in Example 4.
[Fig. 12] Fig. 12 is a graph showing the proton conductivity and the surface resistivity of the proton conductive membrane 7 produced in Example 5.
[Fig. 13] Fig. 13 is an image, as taken through scanning electron microscope, of the membrane electrode assembly produced in Example 6.
[Fig. 14] Fig. 14 is a graph showing the data of cell characteristics of the fuel cell produced in Example 6.

### Best mode for carrying out the invention

The invention is described in detail hereinunder. In this description, the numerical range expressed by the wording "a number to another number" means the range that falls between the former number indicating the lowermost limit of the range and the latter number indicating the uppermost limit thereof.
Unless otherwise specifically indicated, the proton conductivity as referred to in this description is in dry nitrogen.
Also as referred to in this description, good proton conductive potency is meant to indicate, for example, those having a proton conductivity of at least 10⁻⁸ S·cm⁻¹, preferably at least 10⁻⁷ S·cm⁻¹.

The proton conductive membrane of the invention comprises a metal oxide structure having an orderly or random porous structure, in which the porous structure contains a proton acid salt having at least one hydrogen atom capable of being loosed as a proton. In the invention, the proton acid salt exists in an amorphous state in the metal oxide structure.
The metal oxide structure that constitutes the skeleton of the proton conductive membrane of the invention comprises a metal oxide, in which proton acid salts disperse in the metal oxide. Disperse, as referred to herein, means that, for example, the proton acid salts do not concentrate in one site in the metal oxide structure but exists as spaced from each other therein in such a degree that the structure could exhibit proton conductivity. Accordingly, the metal oxide structure in the invention has an orderly or random porous structure, in which proton acid salts may exist in the pore, having a space around it therein, or may exist as fitted in the pore. Of course, the metal oxide structure may have any other structure than the above. "As fitted", as referred to herein, means that, for example, a proton acid salt is fitted in the pore of the metal. oxide structure with little space left around it therein, for example, in such a manner that the proton acid salt content is from 10 to 100 %, preferably from 60 to 100 % relative to the pore volume in the structure. The embodiment of this type may be produced, for example, according to the method (2) of forming a mixture of a metal oxide precursor and a proton acid salt into a film, as shown hereinunder for production of the proton conductive membrane of the invention.

The thickness of the metal oxide structure corresponds to the thickness of the proton conductive membrane of the invention, and not specifically defined, it may be, for example, at most 1 µm, preferably from 10 to 500 nm. In particular, when a relatively thick metal oxide structure having a thickness of from 100 to 200 nm is employed, it is favorable as giving a proton conductive membrane having more sufficient strength. On the other hand, when a thinner metal oxide structure having a thickness of from 10 to 50 nm is employed, it is also favorable as giving a proton conductive membrane having a smaller surface resistivity and having sufficient strength. Further, the proton conductive membrane of the invention may have self-sustainability and/or have a strength on such a level that it may be transferred onto any other substrate.

Not specifically defined, the metal that constitutes the metal oxide structure in the invention is preferably titanium, zirconium, vanadium, niobium, boron, aluminium, gallium, indium, silicon, germanium and tin; more preferably silicon, zirconium, titanium; even more preferably silicon.
One or more such metals may constitute the structure.
A metal oxide to be obtained from the metal oxide precursor mentioned hereinunder is also a preferred embodiment of the metal oxide in the invention.
The metal oxide structure in the invention comprises a metal oxide; or that is, the structure may comprise a metal oxide as the main ingredient thereof, and it is unnecessary that the structure is composed of a metal oxide alone; and needless-to-say, the structure may contain any other component not overstepping the scope and the gist of the invention.

The type of the proton acid salt to be employed in the invention is not specifically defined. Amorphous, as referred to herein, means that the proton acid salt exists in an amorphous state while working in the proton conductive membrane. For example, it includes an amorphous solid acid. The amorphous state in the invention is meant to include not only a completely amorphous state but also any other state near or similar to it.
The proton acid salt to be used in the invention is a proton acid salt having at least one hydrogen atom capable of being loosed as a proton, and, for example, it is a salt of a proton acid having a sulfonic acid group, a carboxylic acid group, a phosphoric acid group or a halogen atom. The proton acid salt for use in the invention is preferably has a sulfonic acid group or a phosphoric acid group.
The type of the salt moiety of the proton acid salt for use in the invention is not specifically defined, not overstepping the scope and the gist of the invention. Preferably, it is a metal salt with an alkali metal such as a sodium salt, a potassium salt, a cesium salt, or a metal salt with an alkaline earth metal such as magnesium, calcium, strontium.
Concretely, preferred examples of the salt are CsH₂PO₄, Cs₂HPO₄, CsHSO₄, CsHSeSO₄, RbHSO₄, RbH₂PO₄, KHSO₄.
One or more different types of proton acid salts may constitute the metal oxide structure in the invention.
In case where two or more proton acid salts are combined, the blend ratio may be preferably as follows: Relative to one mol of a first proton acid salt, the other proton acid salt is within a range of from 0.5 to 2 mols; more preferably, relative to one mol of a first proton acid salt, the other proton acid salt is within a range of from 0.5 to 2 mols and the ratio (by mol) of the first proton acid salt to the other proton acid salt is not 1/1. Further, the proton acid salt component may be composed of solid alone, or may contain liquid.
Not overstepping the scope and the gist of the invention, the proton acid salt may contain any other acid. Examples of the additional acid are hydrochloric acid, perchloric acid, hydrogen-borofluoric acid, sulfuric acid, phosphoric acid. The blend ratio of the additional acid is preferably, by mol, (proton acid salt/other acid) = from 8/2 to 7/3.

In the proton conductive membrane of the invention, proton acid salts disperse in the metal oxide structure having a porous structure; and in this case, the proton acid salts exist in an amorphous state in the pores of a nano-scale size in the metal oxide structure. The proton acid salt to be used in the invention is in an amorphous state or in a state near or similar to it while it works in the proton conductive membrane; and in order that the proton acid salt could not be crystalline, the following methods may be employed;
(1) A method of changing the composition ratio of the proton acid salt so that the salt could not be crystallized; (2) a method of rapidly cooling after heat treatment; (3) a method of making the proton acid salt put in the pores in which the salt could not be crystallized. More concretely, the methods may be attained by the following means.
(1) Method of changing the composition ratio of proton acid salt so that the salt could not be crystallized:
   For example, some other acid may be mixed in a solid acid so as not to form a crystal. One preferred example comprises adding, to 1 mol of a solid acid, from 0.01 to 0.5 mol of a proton acid salt having the same anionic group as that in the solid acid.
(2) Method of rapidly cooling after heat treatment:
   For example, after heated under a condition at 160°C, the membrane is rapidly cooled under a condition at 30°C.
(3) Method of making proton acid salt put in pores in which the salt could not be crystallized.
   This may be a method of introducing a proton acid salt into fine pores in which the salt is hardly crystallized. The fine pores in this case preferably have a pore size of at most 100 nm, more preferably at most 10 nm, even more preferably at most 5 nm.

Preferably in the invention, a large quantity of a proton acid salt disperses in an amorphous state in a metal oxide structure. According to the means, a proton conductive membrane may be obtained, containing a smaller amount of a proton acid salt but showing better proton conductivity. Further, when the content of the proton acid salt in the proton conductive membrane may be reduced, then the content of the metal oxide structure therein may be increased, and therefore, the proton conductive membrane may have higher strength.
Preferably in the invention, the proton acid salt accounts for, for example, from 10 to 80 % of the volume of the proton conductive membrane, more preferably from 30 to 60 %.

The proton conductive membrane of the invention shows good proton conductivity (for example, proton conductivity of at least 10⁻⁸ S·cm⁻¹, preferably at least 10⁻⁷ S·cm⁻¹) in both of a high-temperature range and a low-temperature range.
Regarding the high-temperature range, for example, the proton conductive membrane shows good proton conductivity at any temperature of 90°C, 100°C, 105°C, 110°C, 140°C, 180°C, 200°C or higher. Nafion heretofore been known in the art could show proton conductivity at a temperature lower than 100°C, generally at a temperature lower than 90°C; and taking it into consideration, the invention is extremely excellent. The uppermost limit of the working temperature is not specifically defined; and for example, the membrane may be used at a temperature not higher than 500°C, preferably not higher than 300°C.
Regarding the low-temperature range, for example, the proton conductive membrane shows good proton conductivity at any temperature of 100°C, 95°C, 90°C, 80°C, 70°C, 50°C, 30°C or lower. The lowermost limit of the working temperature may be 30°C or higher, preferably 70°C or higher. In particular, the proton conductive membrane of the invention shows proton conductivity even at room temperature. A proton conductive membrane formed of a conventionally known proton acid, CsHSO₄ alone could show proton conductivity at a temperature higher than 100°C, generally at 140°C or higher; and taking it into consideration, the invention is extremely advantageous.
In the manner as above, the proton conductive membrane of the invention shows good proton conductivity in a broad temperature range. For example, it shows good proton conductivity over a temperature range of 60°C or higher, even over a temperature range of 100°C or higher.

Preferably, the proton conductivity of the proton conductive membrane of the invention is at least 10⁻⁷ S·cm⁻¹, more preferably at least 10^{-6.5} S·cm⁻¹, even more preferably at least 10⁻⁵ S·cm⁻¹.

Also preferably, the proton conductive membrane of the invention has a surface resistivity of from 0.01 to 10 Ωcm⁻², more preferably from 0.01 to 1 Ωcm⁻². Having such a small surface resistivity, the proton conductive membrane is advantageous in that its proton conductive efficiency may increase, and for example, it may improve the performance of fuel cells.
In addition, the proton conductive membrane of the invention is preferably so constituted that the proton acid salt and the metal oxide structure therein account for at least 90 % (more preferably at least 95 %) of the volume of the membrane. Having such a high-purity structure, the proton conductive membrane may have further higher proton conductivity.
Further, it is desirable that the molar ratio of the metal oxide structure to the proton acid salt is from 1/4 to 4/1, more preferably from 2/3 to 4/1, even more preferably from 4/5 to 4/2.
The porosity of the proton conductive membrane (the proportion (%) of the volume of the space existing in the proton conductive membrane, relative to the volume of the proton conductive membrane) is preferably at most 70 %, more preferably at most 50 %.

The production method for producing the proton conductive membrane of the invention is not specifically defined. For example, it may be produced according to (1) a method of making an inorganic porous structure containing a proton acid salt; or (2) a method of forming a mixture containing a metal oxide precursor and a proton acid salt into a film.

### (1) Method of making inorganic porous structure containing proton acid salt:

As the metal oxide structure in the invention, employed is an inorganic porous structure, and the pores that the inorganic porous structure has are filled with an amorphous proton acid, thereby producing a proton conductive membrane of the invention.
In this, the inorganic porous structure is a porous structure having a large number of pores having a pore size of from 0.4 to 40 nm. Preferably, the pores may have a nearly constant pore size. The pores may be provided regularly or randomly as long as the pores are dispersed, but preferably regularly. The mean pore size is preferably from 1 to 10 nm, more preferably from 2 to 10 nm, even more preferably from 2 to 5 nm. For the proton conductive membrane of the invention, for example, employable is a porous structure having pores having a mean pore size of from 2 to 10 nm (preferably from 2 to 5 nm) and having fine pores having a mean pore size of from 0.5 nm to less than 2 nm.
Not specifically defined, the porosity of the inorganic porous structure that the invention may employ (the ratio of the volume of the pores to the volume of the inorganic porous structure and the volume of the pores) is preferably from 20 to 80 %, more preferably from 50 to 75 %.

The porous structure comprises a metal oxide as the main ingredient thereof, and is preferably composed of a metal oxide alone. Preferred examples of the metal oxide are the same as those mentioned hereinabove. The porous structure may be produced in any known method. For example, a mixture comprising a metal oxide precursor and dispersed fine particles to be a template (e.g., surfactant) is formed into a film, then hydrolyzed and gelled, and thereafter the dispersed fine particles are removed to give a porous structure. For removing the dispersed fine particles, for example, herein employable is plasma treatment.
The method of making the porous structure contain a proton acid salt is not specifically defined. For example, the porous structure may be dipped in a solution of a proton acid salt, whereby its pores may contain the proton acid salt.

### (2) Method of forming mixture containing metal oxide precursor and proton acid salt into a film:

The proton conductive membrane of the invention may be produced by hydrolyzing a mixture containing a metal oxide precursor and a proton acid salt or an amorphous proton acid salt precursor, followed by forming it into a film. The amorphous proton acid salt precursor is meant to indicate that the proton acid salt derived from it may be in an amorphous state or in a state near or similar to it while it is worked in a proton conductive membrane containing it. For forming the mixture into a film, for example, employable is a method of applying the mixture onto a substrate in a mode of spin coating and drying it thereon, as well as any other ordinary film formation method. Employing the method gives a proton conductive membrane with few impurities.
The metal oxide precursor for use in the invention is not specifically defined, not overstepping the scope and the gist of the invention. Concretely, the metal oxide precursor includes metal alkoxides, those capable of forming a metal alkoxide when dissolved in a suitable solvent (e.g., TiCl₄), and compounds capable of undergoing sol-gel reaction in a solvent and containing metal and oxygen (e.g., Si (OCN)₄) .
More concretely, it is desirable that the mixture is so designed in producing the proton conductive membrane that the ratio by mol of the metal oxide structure to the proton acid salt in the membrane may be preferably from 1/4 to 4/1, more preferably from 2/3 to 4/1, even more preferably from 4/5 to 4/2. In case where the mixture contains any other component, the proportion of the additional component is preferably at most 30 % by weight of the total.
The metal oxide precursor is more preferably those belonging to a metal alkoxide, or those belonging to a silica precursor.

### Metal Alkoxide:

The alkyl chain that forms the metal alkoxide preferably has from 1 to 10 carbon atoms; and the total number of the carbon atoms constituting the metal alkoxide is preferably at least 4.
The metal alkoxide may have two or more alkoxyl groups, or may have a ligand and two or more alkoxyl groups.

Concretely, the metal alkoxide for use in the invention includes metal alkoxide compounds such as titanium tetrabutoxide, zirconium tetrapropoxide, zirconium tetrabutoxide, aluminium tributoxide, niobium pentabutoxide, silicon tetramethoxide, boron tetraethoxide, titanium tetrapropoxide, tin tetrabutoxide, germanium tetrabutoxide, indium tri (methoxyethoxide) ; metal alkoxides having two or more alkoxyl groups such as methyltrimethoxysilane, diethyldiethoxysilane, tetraethoxysilane; metal alkoxides having a ligand and two or more alkoxyl groups such as acetylacetone; double alkoxides. Of those, preferred are silicon tetraethoxide, zirconium tetrapropoxide, titanium tetrabutoxide.
If desired, two or more different types of metal alkoxides such as those mentioned above may be combined for use herein.

### Silica Precursor:

Concretely, the silica precursor is preferably alkoxysilane, halogenosilane, water glass, silane isocyanate, more preferably alkoxysilane.
The alkoxysilane is preferably tetraalkoxysilane, more preferably tetramethoxysilane, tetraethoxysilane, tetrapropoxysilane.
In addition, also employable herein are organosilane compounds having both an alkyl group and an alkoxide group, such as methyltrimethoxysilane, hexyltrimethoxysilane, octyltrimethoxysilane, cyclopentyltrimethoxysilane, cyclohexyltrimethoxysilane; organosilane compounds having both a vinyl group and an alkoxide group, such as vinyltrimethoxysilane; organosilane compounds having both an amino group and an alkoxide group, such as (N,N-dimethylaminopropyl)trimethoxysilane, (N,N-diethylaminopropyl)trimethoxysilane, aminopropyltrimethoxysilane, N-(6-aminohexyl)aminopropyltrimethoxysilane, (aminoethylaminomethyl)phenethyltrimethoxysilane; compounds having both an ammonium group and an alkoxide group, such as N,N,N-trimethylammoniopropyltrimethoxysilane; organosilane compounds having both a thiocyanate group and an alkoxide group, such as 3-thiocyanatopropylethoxysilane; organosilane compounds having both an ether group and an alkoxide group, such as 3-methoxypropyltrimethoxysilane; organosilane compounds having both a thiol group and an alkoxide group, such as 3-mercaptopropyltrimethoxysilane; organosilane compounds having a halogen and an alkoxide group, such as 3-iodopropyltrimethoxysilane, 3-bromopropyltrimethoxysilane; organosilane compounds having both an epoxy group and an alkoxide group, such as 5,5-epoxyhexyltriethoxysilane; organosilane compounds having both a sulfide group and an alkoxide group, such as bis[3-(triethoxysilyl)propyl]tetrasulfide; organosilane compounds having all a hydroxyl group, an amino group and an alkoxide group, such as bis(2-hydroxyethyl)-3-aminopropyltriethoxysilane; organosilane compounds having an amino group and an alkoxide-hydrolyzed group, such as aminopropylsilane-triol; organosilane compounds having both an alkyl group and a chloride group such as octyltrichlorosilane, cyclotetramethylene-dichlorosilane, (cyclohexylmethyl)trichlorosilane, cyclohexyltrichlorosilane, tert-butyltrichlorosilane; organosilane compounds having both a fluoroalkyl group and a chloride group, such as (decafluoro-1,1,2,2-tetrahydrooctyl)trichlorosilane, (3,3,3-trifluoropropyl)trichlorosilane.
One or more such silica precursors may be used herein either singly or as combined.
In place of the above silica precursor, the corresponding zirconia precursor may also be used herein, also giving a proton conductive membrane having good proton conductivity.

Further, a surfactant and the like may be added to the above mixture; however, preferred for use herein is a mixture composed of a metal oxide precursor, a proton acid and a solvent, thereby giving a proton conductive membrane with few impurities.
Preferred embodiments of a metal oxide precursor and a proton acid salt are tetraethoxysilane (TEOS) and CsHSO₄; Zr (OPr) 4 and CsHSO₄; TEOS and CsH₂PO₄; TEOS and Cs₂SO₄ and H₂SO₄; TEOS and Cs₃PO₄ and H₃PO₄; TEOS and CS₂CO₃ and H₃PO₄. Of those, more preferred are a combination of TEOS and CsHSO₄; and a combination of TEOS and CsH₂PO₄.

The proton conductive membrane of the invention is favorably used in fuel cells. In case where the membrane is used in a fuel cell, the electrode to be in the membrane electrode assembly may comprise a conductive material that carries fine particles of a catalyst metal, and may optionally contain a water repellent and a binder. If desired, a layer that comprises a conductive material not carrying a catalyst and optionally contains a water repellent and a binder may be formed outside the catalyst layer.

The catalyst metal to be used in the electrode may be any metal that promotes the oxidation of hydrogen and the reduction of oxygen, and includes, for example, platinum, gold, silver, palladium, iridium, rhodium, ruthenium, iron, cobalt, nickel, chromium, tungsten, manganese, vanadium or their alloys.

Of those catalysts, especially used is platinum in many cases. The particle size of the metal to be the catalyst is preferably from 1 to 30 nm. Preferably, the catalyst is held by a carrier such as carbon from the viewpoint of its cost, as its amount may be reduced. Preferably, the amount of the catalyst held by a carrier is from 0.01 to 10 mg/cm², as formed into an electrode.

The conductive material may be any electroconductive substance, and includes, for example, various metals and carbon materials.

The carbon material includes, for example, carbon black such as furnace black, channel black, acetylene black; and activated charcoal and graphite. One or more of these may be used either singly or as combined.

As the water repellent, for example, usable is fluorocarbon. The binder is preferably a coating solution for electrode catalyst from the viewpoint of its adhesiveness; but any other various resins may also be used. A water-repellent fluororesin is preferred, more preferably having good heat resistance and oxidation resistance. For example, it includes polytetrafluoroethylene, tetrafluoroethylene-perfluoroalkylvinyl ether copolymer, and tetrafluoroethylene-hexafluoropropylene copolymer.

There is no specific limitation on the method of assembling a proton conductive membrane and an electrode for use in fuel cells, and any known method is applicable to it. Regarding the method for producing the membrane electrode assembly, for example, a Pt catalyst powder held by carbon is mixed with a polytetrafluoroethylene suspension, and applied onto carbon paper and heated to from a catalyst layer. Next, a proton conductive material solution having the same composition as that of a proton conductive membrane is applied onto the catalyst layer and hot-pressed, thereby integrating the proton conductive membrane and the catalyst layer.

Apart from the above, also employable are a method of previously coating a Pt catalyst powder with a proton conducive material solution having the same composition as a proton conductive membrane; a method of applying a catalyst paste onto a proton conductive membrane; a method of forming an electrode on a proton conductive membrane in a mode of electroless plating; a method of making a proton conductive membrane adsorbing a metal complex ion and then reducing it.

The fuel cell of the invention is designed as follows: A thin carbon paper packing material (supporting collector) is airtightly attached to both sides of the proton conductive membrane electrode assembly constructed in the manner as above, and a conductive separator (bipolar plate) is disposed on both sides thereof, where the conductive separator serves both for polar chamber separation and for gas supply to electrode, and thereby obtaining a single cell; and a plurality of such single cells are laminated via a cooling plate, etc. A fuel cell is preferably worked at a high temperature since the catalyst activity in the electrode may increase and the electrode overvoltage may reduce; but in general, since it does not function in the absence of water in case where the proton conductive membrane is to serve as an electrolyte membrane, and therefore, a fuel cell must be worked at a temperature at which water control is possible. On the fuel cell of the invention, the limitation is small, and the preferred range of the working temperature is from room temperature to 280°C.

### Examples

The invention is described in more detail with reference to the following Examples, in which the material used, its amount and the ratio, the details of the treatment and the treatment process may be suitably modified or changed not overstepping the gist and the scope of the invention. Accordingly, the invention should not be limitatively interpreted by the Examples mentioned below.

The samples and the reagents used in the following Examples are mentioned below.
Tetraethoxysilane (hereinafter this may be abbreviated as TEOS): by Aldrich Chemical.
Nonionic surfactant (abbreviated as C₁₆EO₁₀) : by Aldrich Chemical.
Chemical formula: C₁₆EO₁₀(C₁₆H₃₃(OCH₂CH₂)₁₀OH) in which EO means an ethoxy group.
Cs₂SO₄ (cesium sulfate): by Kanto Chemical.
Sulfuric acid: by Kanto Chemical.
Nonionic surfactant: (EO₁₀₀PO₆₅EO₁₀₀) (Pluronic F127), by BASF.
CsHSO₄: prepared as follows: Acetone was added to a solution of Cs₂SO₄/diluted sulfuric acid/water = 1/2/12, whereby CsHSO₄ was precipitated. Then, this was taken put through filtration, dried in vacuum at 70°C, for 24 hours, and the thus-produced product was used herein. Thus obtained, CsHSO₄ was a crystal powder.
CsH₂PO₄: prepared as follows: Cs₂CO₃ (by Kanto Chemical) and phosphoric acid (aqueous 85 mas.% solution, by Junsei Chemical) were mixed in a ratio of 1/2, and acetone was added to it whereby CSH₂PO₄ was precipitated. The precipitate was taken out through filtration, then dried at 70°C in vacuum for 24 hours, and dried in a vacuum desiccator.

### Example 1 - Production of proton conductive membrane according to a method of making an inorganic porous structure contain an amorphous proton acid, and its characteristics:

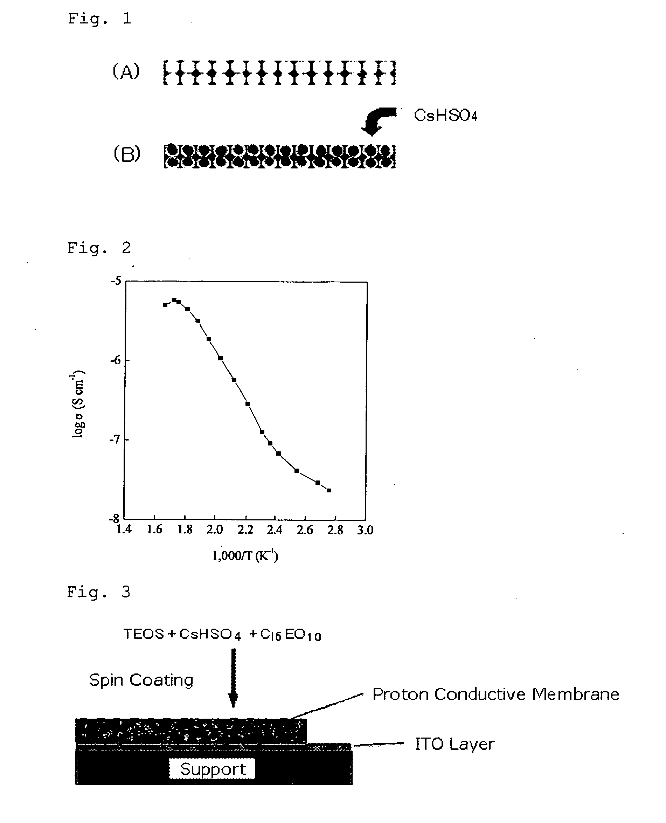

As shown in the outline view of Fig. 1, a proton conductive membrane was produced.
An inorganic porous structure was produced according to the following method. Tetraethoxysilane (TEOS) (5.2 g, 25 mmol), propanol (6 g), and 0.004 M hydrochloric acid (0.45 g) were mixed, and stirred at 60°C for 1 hour. Next, 0.06 M hydrochloric acid (2 g) was added to it. The resulting sol was stirred at 70°C for 1 hour. A nonionic surfactant (C₁₉EO₁₀) was dissolved in 11. 4 g of propanol, and gradually added to the above sol with stirring. Afterwards, the mixture was stirred at room temperature for 1 hour. The final composition of the mixture was TEOS/propanol/water/hydrochloric acid/nonionic surfactant = 1/11.4/5/0.004/0.1. The above mixture was applied onto a substrate (prepared by forming an ITO electrode layer on a support, having a size of 20 cm x 15 cm), in a mode of spin coating (3000 rpm, 1 minute). Prior to the spin coating, the substrate was washed with ethanol, then ultrasonically washed with distilled water, and further washed with acetone. The thin film was left at 150°C for 6 hours, and then processed for plasma treatment (30 W, 20 minutes) to remove the nonionic surfactant. As a result, an inorganic (silica) porous structure transparent and having many pores with no crack was obtained, as in Fig. 1A.

The inorganic porous structure was made to contain a proton acid salt, according to the following method. The porous structure was dipped in an aqueous 4 N CsHSO₄ solution with shaking (20 minutes). Next, the excess water on the surface was removed, then this was rinsed with acetone and dried with nitrogen to obtain a proton conductive membrane as in Fig. 1B. Thus obtained, the proton conductive membrane 1 had sufficient strength.

### (Proton Conductivity)

The proton conductivity of the proton conductive membrane 1 obtained in the above was measured with an impedance analyzer (Solartron's SI-1260) . The result is shown in Fig. 2. In Fig. 2, the vertical axis indicates the logarithmic number of proton conductivity (S·cm⁻¹), and the horizontal axis indicates the reciprocal of temperature (1,000/T(K⁻¹)).
As in Fig. 2, the proton conductivity monotonously increased at up to 300°C. The melting point of ordinary CsHSO₄ crystal is about 200 to 230°C; but the proton conductive membrane of this Example did not show rapid conductivity transition corresponding to the ultra-ion phase transition often shown by ordinary CsHSO₄ crystal. This means that the membrane kept ultra-proton conductivity within the entire temperature range.
The surface resistivity of the proton conductive membrane 1 was 2 Ωcm⁻².

### Example 2 - Production (1) of proton conductive membrane according to a method of forming a mixture containing a metal oxide precursor and a proton acid salt into a film, and its characteristics:

As shown in the outline view of Fig. 3, a proton conductive membrane was produced.
CsHSO₄ (0.46 g) and a nonionic surfactant ((EO₁₀₀PO₆₅EO₁₀₀, 0.4 g) were dissolved in deionized water (2 g), and then tetraethoxysilane (TEOS) (0.624 g) was added to it. The mixture was stirred for 15 minutes to obtain a transparent sol. The final molar composition of the mixture was TEOS/CsHSO₄/ nonionic surfactant = 3/2/0.032. The mixture was applied onto a substrate (prepared by forming an ITO electrode layer on a support, having a size of 20 cm x 15 cm) , in a mode of spin coating (3000 rpm, 1 minute). Afterwards, this was left at 180°C for 2 hours, and a proton conductive membrane 2 having a molar composition of 40CsHSO₄-60SiO₂ was thus obtained. Similarly produced were a proton conductive membrane 3 having a molar composition of TEOS/CsHSO₄/nonionic surfactant = 2/3/0.032; and a proton conductive membrane 4 having a molar composition of TEOS/CsHSO_{4/}nonionic surfactant = 4/1/0.032. Thus obtained, the proton conductive membranes 2 to 4 had sufficient strength.

### (X-ray Diffraction Pattern)

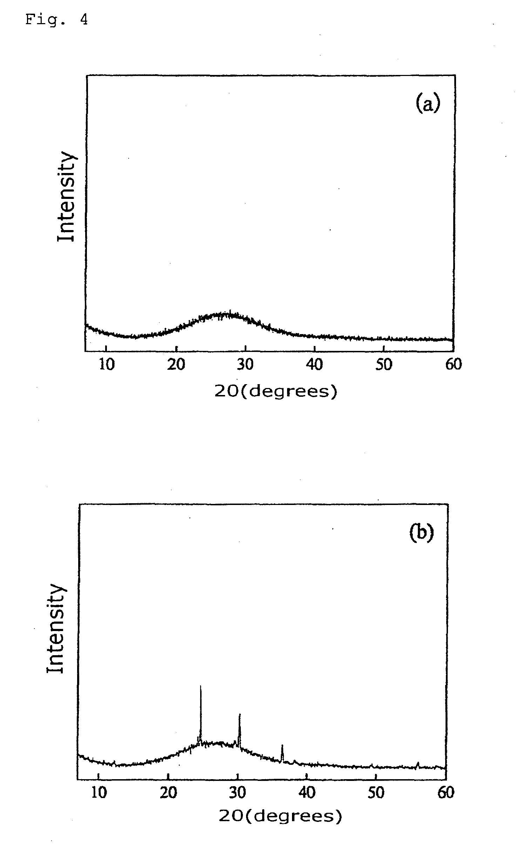

The X-ray diffraction pattern (XRD pattern) of the proton conductive membrane 2 obtained in the above was measured at 45 kV and 400 mA, using a Ni-processed Cu-Kα X-ray diffractiometer (Mac Science's MXP21TA-PO) . The result is shown in Fig. 4. Fig. 4(a) shows the data of the proton conductive membrane 2; and Fig. 4(b) shows the data of the proton conductive membrane 3.
As a result, both the proton conductive membranes 2 and 3 gave few crystal peaks, and it is understood that the CsHSO₄ component was almost completely amorphous in these films. In particular, the tendency was more remarkable in the proton conductive membrane 2.

### (Scanning electron microscope (SEM))

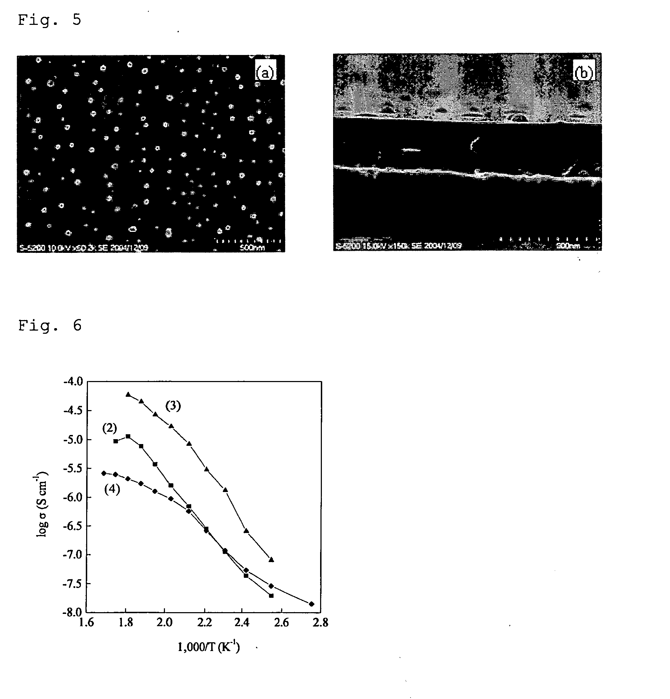

The proton conductive membrane 2 obtained in the above was analyzed through scanning electron microscope (SEM). SEM was as follows: The surface and the cross section of the membrane were coated, using an ion coater (Hitachi's E-1030), and then observed with a field-emission scanning electronic microscope (Hitachi's S-5200). The results are shown in Fig. 5. Fig. 5(a) shows an image of the surface of the membrane; and Fig. 5(b) shows an image of the cross section of the membrane. The proton conductive membrane 2 obtained in the above was formed of a dense CsHSO₄-SiO₂ composite, and no crack was seen on its surface. Further, in the surface of the membrane, formed were fine silica particles having a particle size of 40 nm. The thickness of the film was about 250 nm (Fig. 5(a), Fig. 5(b)) .

### (Proton Conductivity)

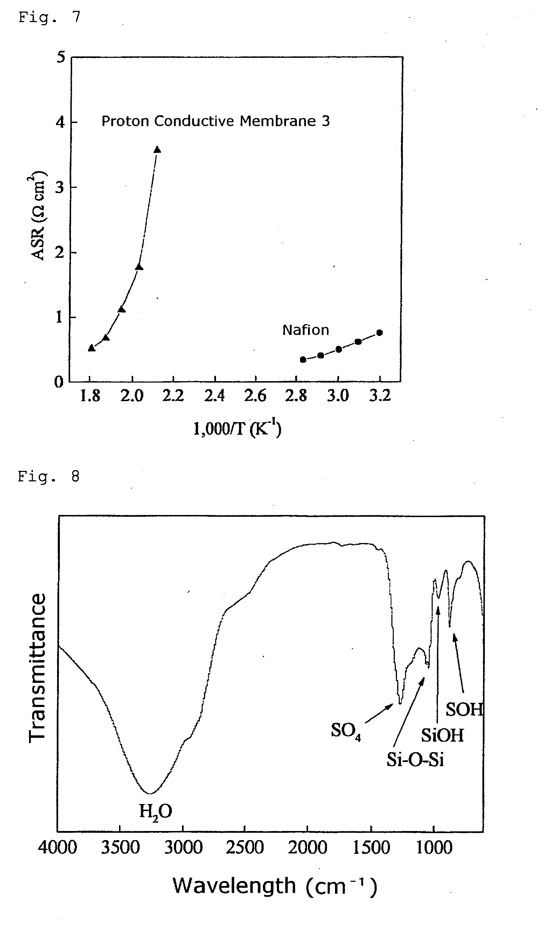

In the same manner as in Example 1, the proton conductivity of the proton conductive membranes 2 to 4 was measured. The results are shown in Fig. 6. In Fig. 6, the vertical axis indicates the logarithmic number of proton conductivity (S·cm⁻¹), and the horizontal axis indicates the reciprocal of temperature (1, 000/T (K⁻¹)). In Fig. 6, (2) , (3) and (4) indicate the proton conductive membrane 2, the proton conductive membrane 3 and the proton conductive membrane 4, respectively.
As illustrated, the proton conductivity increased nearly linearly within a temperature range of from 90 to 300°C. In particular, it was confirmed that the proton conductivity of the proton conductive membrane 3 is higher by approximately from 10 to 100 times than that of the proton conductive membrane 4.
The surface resistivity of the proton conductive membrane 3 and Nafion is shown in Fig. 7. The surface resistivity of the proton conductive membrane 3 within a range of from 200 to 300°C is on the same level as the surface resistivity of Nafion membrane within a range of from 40 to 80°C.

### Example 3 - Production (2) of proton conductive membrane according to a method of forming a mixture containing a metal oxide precursor and a proton acid salt into a film, and its characteristics:

CsHSO₄ (0. 46 g) was dissolved in deionized water (3 g), stirred for 15 minutes, and then tetraethoxysilane (TEOS) (0.624 g) was added to it. The mixture was fully stirred. The resulting sol was applied onto a substrate (prepared by forming an ITO electrode layer on a support, having a size of 20 cm x 15 cm), in a mode of spin coating (3000 rpm, 1 minute). Afterwards, this was left at 160°C for 2 hours, and a proton conductive membrane 5 was thus obtained. The proton conductive membrane 5 had sufficient strength.

### (IR Spectrometry)

The IR spectrum of the proton conductive membrane 5 was measured, using an IR spectrometer, Nicolet Nexus 670 FT (resolution, 2 cm⁻¹). The result is shown in Fig. 8. The comparison between pure CsHSO₄ and SiO₂ in point of their IR spectra confirms that the peak at 860 cm⁻¹ indicates the S-OH bond of HSO₄; the peak at 960 cm⁻¹ indicates the Si-OH bond; the peak at 1027 cm⁻¹ indicates SO₄; and the peak at 1047 cm⁻¹ indicates the Si-O-Si bond.

### (X-ray Diffraction Pattern)

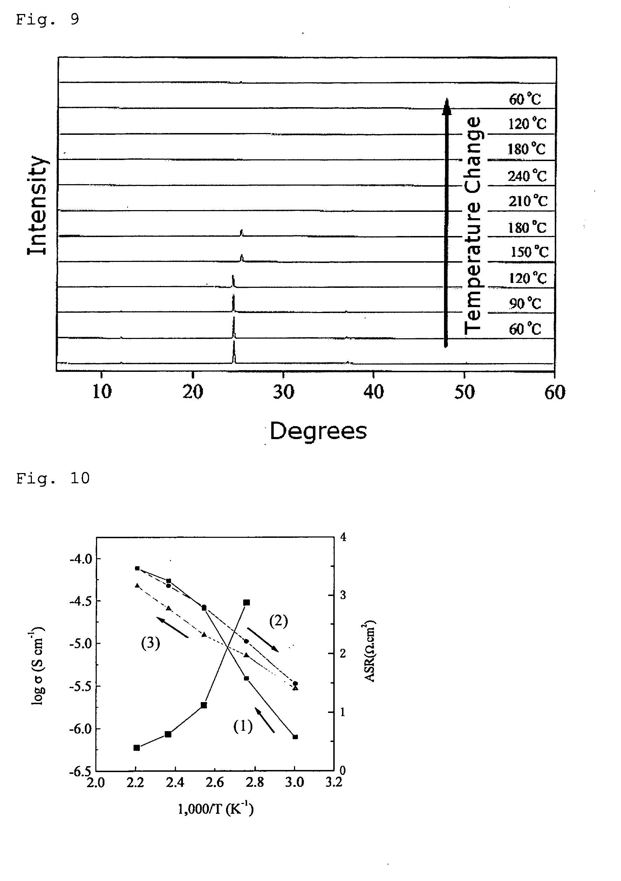

The X-ray diffraction pattern of the above proton conductive membrane 5 was measured, and the result is shown in Fig. 9. In Fig. 9, seen is a sharp peak at 24 degrees, and this indicates a crystal phase having an extremely small degree of crystallinity. At a temperature higher than 150°C, the peak changed from 24 degrees to 25 degrees. This shows ultra-ion conductive phase transition; indicating that the proton conductive membrane 5 is in an amorphous state. When the temperature was higher than 210°C, then the crystal phase CsHSO₄ completely disappeared. At 210°C, CsHSO₄ was amorphous. Afterwards, when the temperature was lowered to 60°C, no crystal was found. It was confirmed that the membrane still had good proton conductivity even at 60°C.

### (Temperature Dependency)

With heating from 60°C up to 180°C, the proton conductivity of the proton conductive membrane 5 was measured (1). Next, with cooling from 180°C to 60°C, the proton conductivity of the membrane was measured (2). Further, again with heating from 60°C up to 180°C, the proton conductivity of the membrane was measured (3). The proton conductivity was measured in the same manner as in Example 1. In addition, the surface resistivity of the membrane at different temperatures was measured. The results are shown in Fig. 10. In Fig. 10, (1) to (3) correspond to the above (1) to (3), respectively; and the graph rising up toward the right-hand side shows the surface resistivity of the membrane.
As in Fig. 10, the membrane had high proton conductivity at different temperatures; and in particular, with the increase in the temperature, the proton conductivity increased, and with the decrease in the temperature, the proton conductivity decreased. The surface resistivity of the membrane was low at different temperatures; and with the increase in the temperature, the surface resistivity decreased more. In particular, it is understood that the membrane has more favorable properties when measured at 120°C, 160°C and 180°C, and that the membrane is remarkably good at 120°C and 160°C.

### Example 4 - Production (3) of proton conductive membrane according to a method of forming a mixture containing a metal oxide precursor and a proton acid salt (Cs_{0.9}H_{1.1}SO₄) into a film, and.its characteristics:

Powdery CsHSO₄ (0.414 g, 1.8 mol ) and liquid H₂SO₄ (0.0196g, 0.2 mmol) were added to deionized water (3 g), and stirred in water with ice for 15 minutes, and then tetraethoxysilane (TEOS) (0. 624 g) was added thereto and powerfully stirred in water with ice for 2 hours, and further stirred at 50°C. The resulting sol was filtered through a filter having a pore size of 0.2 µm, and then, in an air atmosphere, this was applied onto a substrate (prepared by forming an ITO electrode layer on a support, and having a size of 20 cm x 15 cm), in a mode of spin coating (2000 rpm, 1 minute). Afterwards, in a nitrogen atmosphere, this was left at 160°C for 2 h ours, thereby obtaining a proton conductive membrane 6. Thus obtained, the proton conductive membrane 6. had a molar composition of 40Cs_{0.9}H_{1.1}SO₄-60SiO₂.

### (Temperature Dependency)

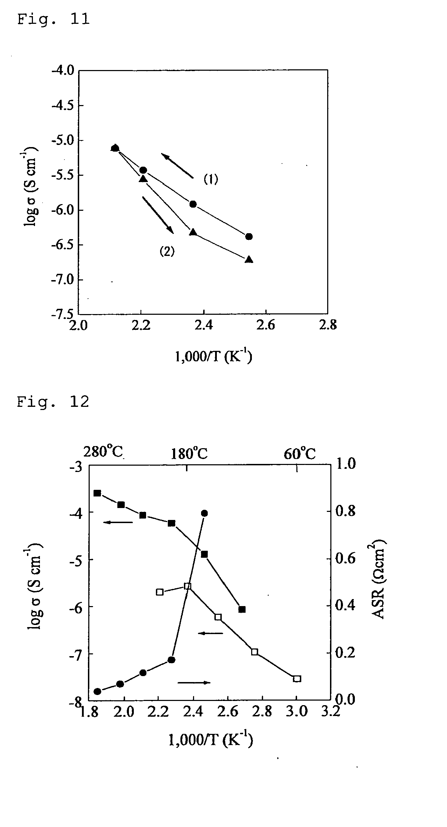

With heating from 120°C up to 180°C, the proton conductivity of the proton conductive membrane 6 was measured (1); and then, with cooling from 180°C to 120°C, the proton conductivity of the membrane was measured (2). The proton conductivity was measured in the same manner as in Example 1. The results are shown in Fig. 11. In Fig. 11, (1) and (2) correspond to the above (1) and (2), respectively. As in Fig. 11, it is understood that the proton conductive membrane of the invention, produced with Cs_{0.9}H_{1.1}SO₄ that differs from a solid acid as the starting material for the amorphous proton acid material, may have good proton conductivity.

### Example 5 - Production (4) of proton conductive membrane according to a method of forming a mixture containing a metal oxide precursor and a proton acid salt (phosphorus acid-type compound) into a film, and its characteristics:

CsH₂PO₄ (0.46 g) was dissolved in deionized water (3 g), stirred for 1 hour, and then tetraethoxysilane (TEOS) (0.624 g) was added to it. The resulting mixture was stirred for 2 hours, while exposed to ice water, and then stirred at 60°C for 2 hours. The resulting sol was applied onto a substrate (prepared by forming an ITO electrode layer on a support, and having a size of 20 cm x 15 cm) , in a mode of spin coating (2000 rpm, 1 minute). This was dried at 200°C for 8 hours, thereby obtaining a proton conductive membrane 7. Thus obtained, the proton conductive membrane 7 had a molar composition of 40CsH₂PO₄-60SiO₂, and its thickness was 150 nm.

### (Proton Conductivity)

The proton conductivity of the proton conductive membrane 7 was measured, changing the temperature according to the method of Example 1. The result is shown in Fig. 12.
In this, the black squares indicate the proton conductivity measured in a wet nitrogen gas equivalent to a moisture partial pressure of 0.3 atm, and the data continuously increased from 100°C up to 267°C. In this condition, the surface resistivity of the membrane was 0.2 cm⁻² at 167°C.
The white squares indicate the proton conductivity measured in a dry nitrogen atmosphere, and the data monotonously increased from 60°C up to 150°C. In this condition, the surface resistivity was 75 Ωcm⁻² at 150°C.
The computed data of the surface resistivity of the proton conductive membrane 7 are shown in Fig. 12, as the black dots.
These results confirm that the proton conductive membrane of the invention, for which a phosphoric acid-type proton acid salt was employed, also has good proton conductivity.

### Example 6:

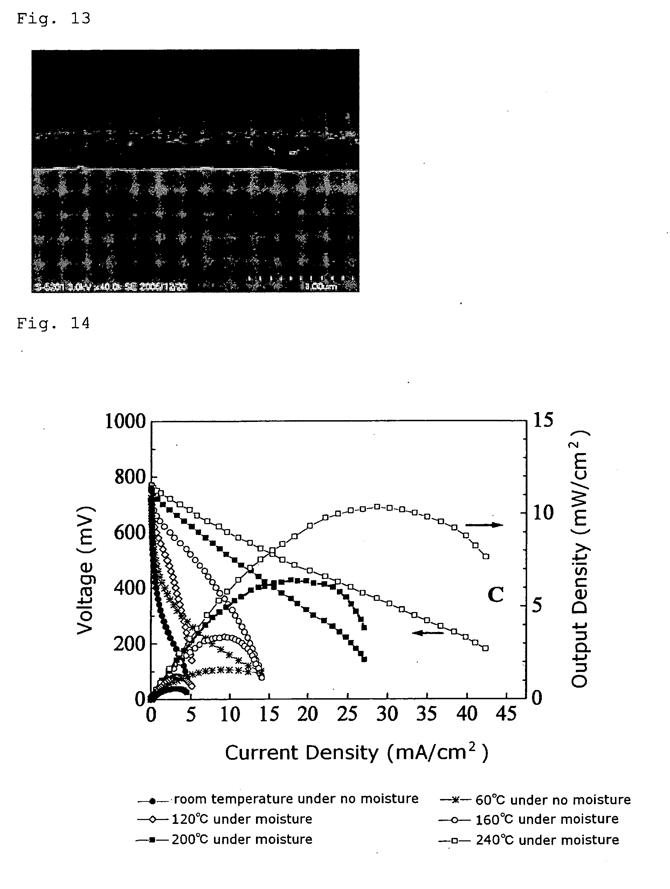

Using an ion coater (Hitachi's E-1030), a Pt-Pd (Pd content, 3 % by weight) cathode layer was formed on a surface-washed, porous glass sheet (VYCOR 7930). Next, a single polyvinyl alcohol layer was formed thereon, according to a spin-coating method. Next, according to the method of Example 3, a sol was applied onto it in a mode of spin coating thereby to form a layer having a final molar composition of CsHSO₄/SiO₂ = 40/60, and then left at 200°C for 2 hours to obtain a proton conductive membrane 8.
Further on it, formed was a Pt anode layer according to sputtering for 3 minutes through a shadow mask having a diameter of 3 mm. Fig. 13 shows a SEM picture of the obtained membrane electrode assembly. As is obvious from Fig. 13, the membrane electrode assembly has a structure of the proton conductive membrane 8 sandwiched between the cathode layer and the anode layer.

A metal wire was connected to the membrane electrode assembly, and set in a domestic fuel cell device, and under the condition mentioned below, the current density was gradually increased and then gradually decreased, whereupon the voltage at different current density was measured.

### Test Condition:

Anode layer: Hydrogen gas as fuel was supplied at a rate of 120 ml/min.
Cathode layer: Oxygen gas as fuel was supplied at a rate of 120 ml/min.
Moisture application: A pure gas flow was applied at room temperature.
As in Fig. 14, the open circuit voltage was 770 mV, and the cell had good fuel cell characteristics. It was not almost influenced by humidity and temperature.

### Industrial applicability

The proton conductive membrane of the invention is favorably used in fuel cells.

## Claims

1. A proton conductive membrane comprising a metal oxide structure having an orderly or random porous structure and a proton acid salt having at least one hydrogen atom capable of being loosed as a proton in the porous structure.

2. A proton conductive membrane comprising a metal oxide structure and a proton acid salt in an amorphous state in the metal oxide structure.

3. The proton conductive membrane as claimed in Claim 1 or 2, having a thickness of at most 1 µm.

4. The proton conductive membrane as claimed in Claim 1, having a proton conductivity of at least 10⁻⁸ S·cm⁻¹ at a temperature lower than 100°C.

5. The proton conductive membrane as claimed in any one of Claims 1 to 4, having a thickness of from 10 to 500 nm.

6. The proton conductive membrane as claimed in any one of Claims 1 to 5, having a proton conductivity of at least 10⁻⁷ S·cm⁻¹ at a temperature lower than 100°C.

7. The proton conductive membrane as claimed in any one of Claims 1 to 6, having a proton conductivity of at least 10⁻⁷ S-cm⁻¹ over a temperature range not lower than 60°C.

8. The proton conductive membrane as claimed in any one of Claims 1 to 7, having a surface resistivity of from 0.01 to 10 Ωcm⁻².

9. The proton conductive membrane as claimed in any one of Claims 1 to 8, wherein the metal oxide is silica.

10. The proton conductive membrane as claimed in any one of Claims 1 to 9, wherein the proton acid salt has a sulfonic acid group or a phosphoric acid group.

11. The proton conductive membrane as claimed in Claim 10, wherein the proton acid salt is CsHSO₄ and/or CsH₂PO₄.

12. The proton conductive membrane as claimed in any one of Claims 1 to 11, which has a porosity of at most 50 %.

13. A membrane electrode assembly having a pair of electrodes and a proton conductive membrane of any one of Claims 1 to 12 disposed between the electrodes.

14. A fuel cell having a proton conductive membrane of any one of Claims 1 to 12.

15. A method for producing a proton conductive membrane of any one of Claims 1 to 12, comprising hydrolyzing a mixture containing a metal oxide precursor and a proton acid salt, and forming it into a film.
